# EUROPEAN PATENT SPECIFICATION

(11) **EP 3 526 866 B1**
(45) Date of publication and mention of the grant of the patent: **23.03.2022**
(21) Application number: 16784813.4
(22) Date of filing: 11.10.2016
(51) Int. Cl.: H02G 3/06

(54) **FITTING ASSEMBLY FOR CONNECTING A CORRUGATED CONDUIT TO A BOX**
BESCHLAGANORDNUNG ZUM ANSCHLIESSEN EINES GEWELLTEN ROHRES AN EINEM KASTEN
ENSEMBLE RACCORD SERVANT À RACCORDER UN CONDUIT ONDULÉ À UNE BOÎTE

(43) Date of publication of application: 21.08.2019
(73) Proprietor: Prysmian S.p.A., 20126 Milan (IT)
(72) Inventor: ABBIATI, Fabio, 20126 Milano (IT)
(74) Representative: Perani & Partners S.p.A.
(86) International application number: PCT/EP2016/074293
(87) International publication number: WO 2018/068826

(56) References cited:
- EP-A1- 0 634 600
- EP-A1- 0 634 600
- DE-A1-102007 017 918
- US-A- 4 440 425
- US-A- 4 440 425
- US-A- 4 990 721
- US-A1- 2010 264 644
- US-A1- 2010 264 644
- US-B1- 7 897 871
- US-B1- 7 897 871

## Description

### Field of the invention

The present invention relates to the field of equipment and components for connecting a corrugated conduit to a box, such as a joint closure, a terminal box or a junction box for either optical cables and/or electrical cables.

### Background of the invention

Corrugated conduits are widely used for protecting cables extending between boxes, such as switch boxes, junction boxes and the like. In order to connect conduits to boxes conduit glands are provided in which the conduit is tightened by means of a corresponding nut. US 2010/264644 discloses a fitting for connecting a corrugated conduit to a structure. The fitting comprises a cylindrical hollow fitting body and retaining rings. Each retaining ring has ring resilient tabs defining ring gaps therebetween. A user inserts an end of a corrugated conduit into the retaining ring. As the conduit is being inserted, the outer surface of the corrugated conduit bends the ring resilient tabs outwardly thereby allowing the user to translate the retaining ring along the corrugated conduit. When the inwardly extending detents of the tabs engage a corrugation of the corrugated conduit, the retaining surfaces of the inwardly extending detents prevent the corrugated conduit to be translated in the opposite direction. Further relevant fitting bodies which cooperate to retain a corrugated tube are disclosed in US 4 440 425 A, US 4 990 721 A, DE 10 2007 017918.

### Summary of the invention

The Applicant has observed that, in case conduit glands are used, two adjacent glands should be spaced apart from each other at a distance sufficient to mount corresponding tightening nuts, thereby limiting the possibility of connecting multiple conduits to a box without undesirably increasing the box size.

A construction such as the one proposed in US 2010 0264644, is strictly limited to a precise match between the corrugated conduit size and the fitting size, in order both to allow the corrugated conduit to be inserted in the fitting and to prevent its undesired detachment from the fitting itself thereafter.

The Applicant has tackled the problem of providing a fitting assembly which allows an effective mechanical coupling to a conduit, which limits overall encumbrance and with low complexity of moulding design.

In the above, the Applicant has found an assembly for terminating a corrugated conduit according claim 1.

Preferably, the retaining member has at least two retaining wings.

More preferably, the retaining wings are regularly spaced along the circumference of the retaining member.

Preferably, the retaining wings extend axially from the annular portion of the retaining member.

Preferably, the retaining wings comprise an attaching end connected with the annular portion of the retaining member and a free end, the free end being radially deformable with respect to a rest position.

Preferably, the rest position of the free end of the retaining wings is intermediate between the open position and the lock position.

Preferably, the retaining wings have an inner projection facing the cavity and configured to engage with the outer surface of a corrugated conduit received in the cavity when the free end of the retaining wings is in lock position, thereby preventing axial movement of the corrugated conduit..

Preferably, the fastener is a radially rigid ring.

More preferably, the fastener is a cable tie.

Preferably, the retaining wings have an outer projection opposite the cavity and configured to engage with the fastener so as to restrain its axial displacement when engaged with the retaining wing.

Preferably, the aperture in the side wall of the box comprises at least one body wing extending out of the box in the axial direction of the aperture.

More preferably, the aperture comprises at least two body wings arranged angularly spaced apart each other to form gaps therebetween, the gaps size being such as to house the corresponding retaining wings of the retaining member..

Preferably, the annular portion of the retaining member has outer diameter larger than the diameter of the aperture.

Preferably, the retaining wing of the retaining member comprises a first portion close to the annular portion nd a second portion, the first portion has first thickness and the second portion has a second thickness greater than the first thickness, such as to cause the second portion to extend radially outside of the body wings surface..

Preferably, the body wings are integrally formed with the side wall of the box.

### Brief description of the drawings

The present invention will now be described in more detail hereinafter with reference to the accompanying drawings, in which some embodiments of the invention are shown.
FIG. 1 is a perspective view of a fitting assembly for connecting corrugated conduits to a box according to the present invention,

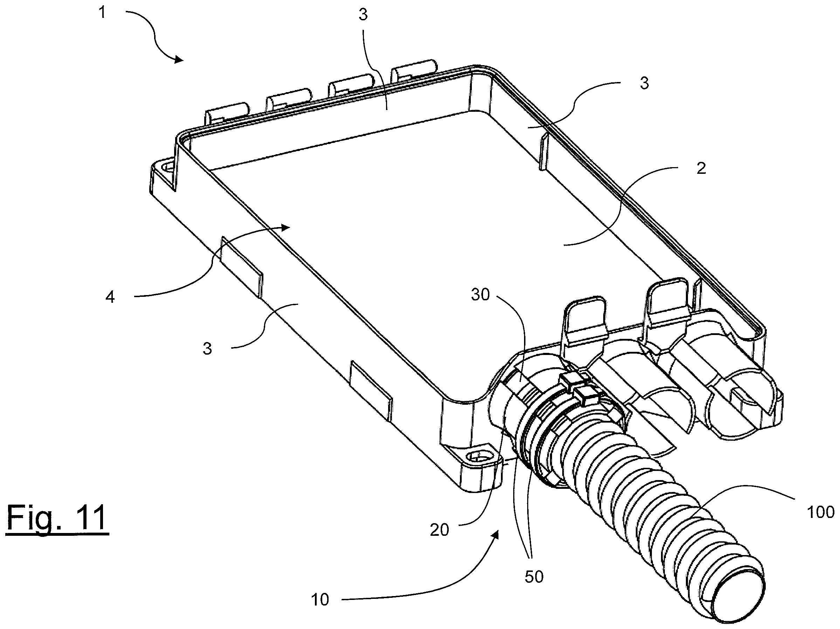

FIGS. 2-11 are perspective views showing assembling of the fitting assembly of FIG. 1 to a box,
FIG. 12 is a detailed perspective view of a box according to the present invention.

### Detailed description

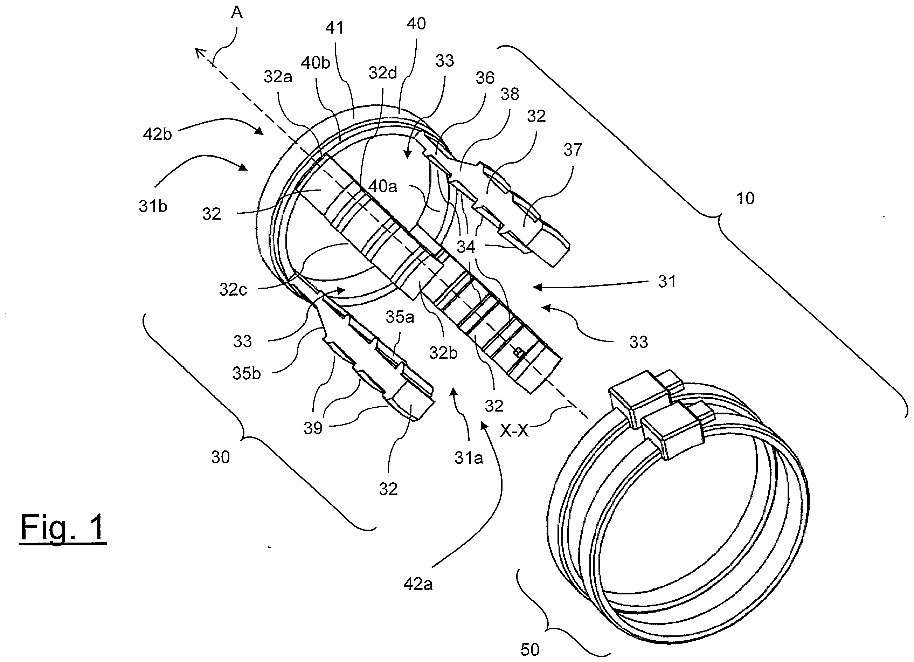

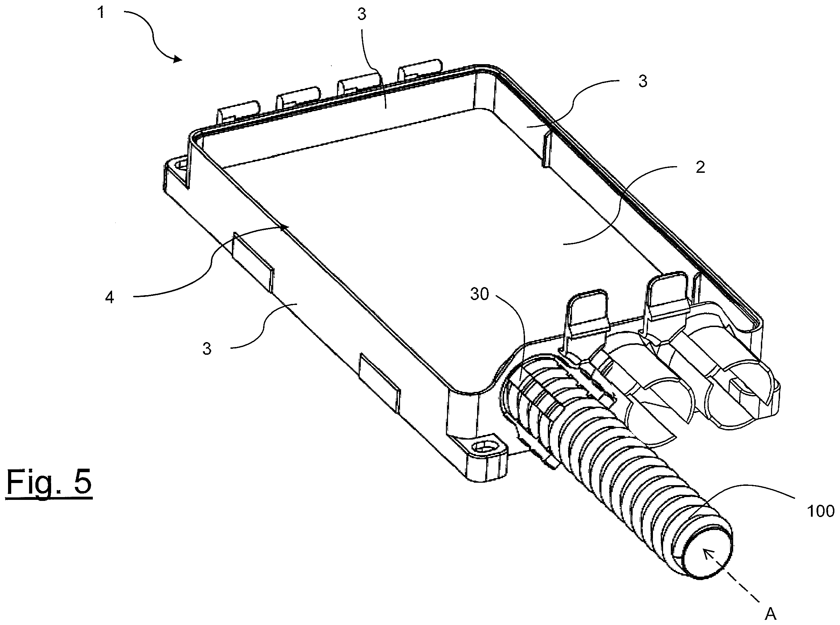

A fitting assembly 10 comprising a retaining member 30 and fasteners 50 are shown in figure 1. The fitting assembly 10 is adapted for connecting respective corrugated conduits 100 to a box 1 as shown in the examples of figures 5, 6, 9 and10.

For the purposes of the present description and claims a corrugated conduit is a tubular conduit having its wall corrugated either annularly or helically, so as to improve its flexibility and side compression resistance; conduits of this type are commonly used to house cables and the like in buildings and similar installation.

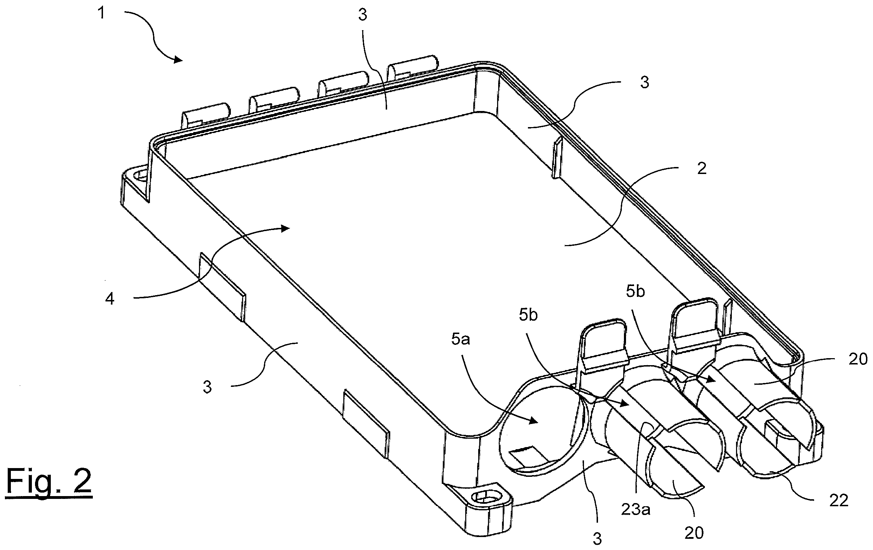

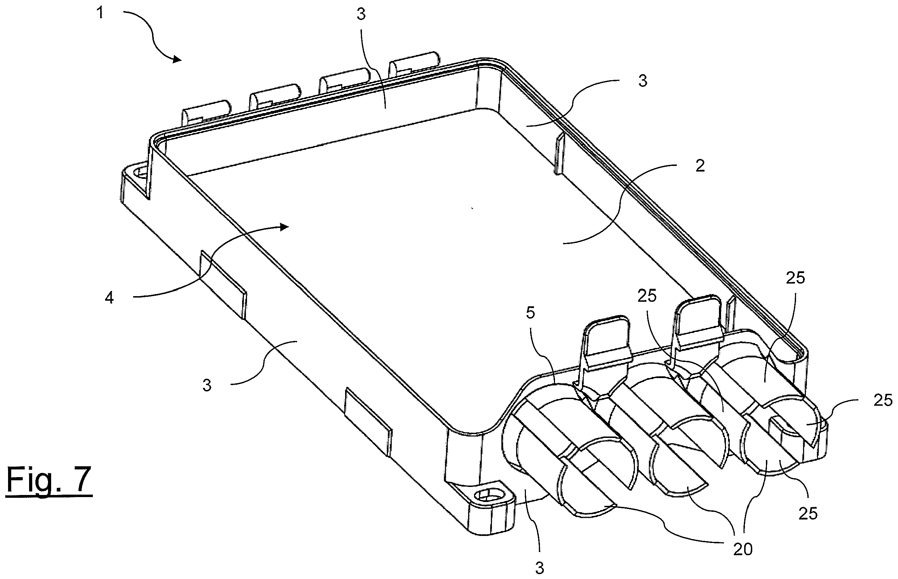

The box 1, shown in figs 2 and 7, is a box commonly used to house optical and/or electrical components for building cabling. The box 1 comprises a base 2 and side walls 3 projecting from the base 2 to define a room 4 designed to receive cables, such as electrical cables and/or optical cables, and relevant components. The box 1 generally further comprises a cover and supports, partitions and other elements as useful for housing the specific components for its intended use, not shown here.

The box 1 comprises apertures 5 formed in one or more of the side walls 3, for allowing passage of respective corrugated conduits 100.

In one embodiment, one or more of the apertures 5 of the box 1 is flush with the wall 3, as shown, for example, in figure 2 with the reference 5a.

Alternatively, one or more of the apertures of the box 1 is associated with a hollow body 20 integrally formed with the box 1 and abutting from the wall 3. The hollow body 20 is intended to guarantee a protection of the box against dust and water, for example as required by IP 56 standard. The hollow body 20 projects out of the box 1 from the aperture 5b and is formed by body wings 25 spaced apart from each other around the perimeter of the aperture 5b.

In the example of figure 2, two hollow bodies 20 are provided in association with relevant apertures 5b and one aperture 5a is shown, flush with the wall 3 of the box 1.

With reference to figure 1, the retaining member 30 comprises a annular portion 40 and retaining wings 32 connected to the annular portion 40. The retaining wings 32 extend along an axial direction X-X from the annular portion 40 and are arranged angularly spaced apart to form gaps 33 therebetween. The retaining wings 32 and the annular portion 40 surround a cavity 31 along the axial direction X-X, configured to receive the corrugated conduit 100.

Preferably, the cavity 31 is cylindrical.

The retaining wings 32 comprise a first portion 36 connected with the annular portion 40 and a second portion 37, ending with the free end 32b. The first portion 36 is arranged between the annular portion 40 and the second portion 37.

The first portion 36 of the retaining wings 32 has internal surface preferably substantially in alignment with the internal surface of the annular portion 40 and a thickness such that its outer surface has a diameter substantially equal or slightly smaller than the diameter of the aperture 5a or 5b.

Preferably, the second portion 37 of the retaining wings 32 has thickness greater than the thickness of the first portion 36 and a tapered connecting portion 38 is interposed between the first portion 36 and the second portion 37. The thickness of the first portion 36 of the retaining wings 32 is such that the retaining wings 32 are resiliently radially deformable inwardly towards the cavity 31 and outwardly away from the cavity 31 from a first position (or rest position) to a second position (or bent position).

For the purposes of the present description and claims, the expressions "resiliently deformable" is used to indicate that a retaining wing of the retaining member can be bent from its rest position to a bent position when a force is applied to it. When the force is absent, the retaining wing tends to return to its rest position. In bent position, each retaining wing, in particular its free end, can be "radially deformed inwardly" or "radially deformed outwardly" with respect to its rest position, that is in a closer or far position, respectively, along a radial direction with respect to a longitudinal axis of the retaining member.

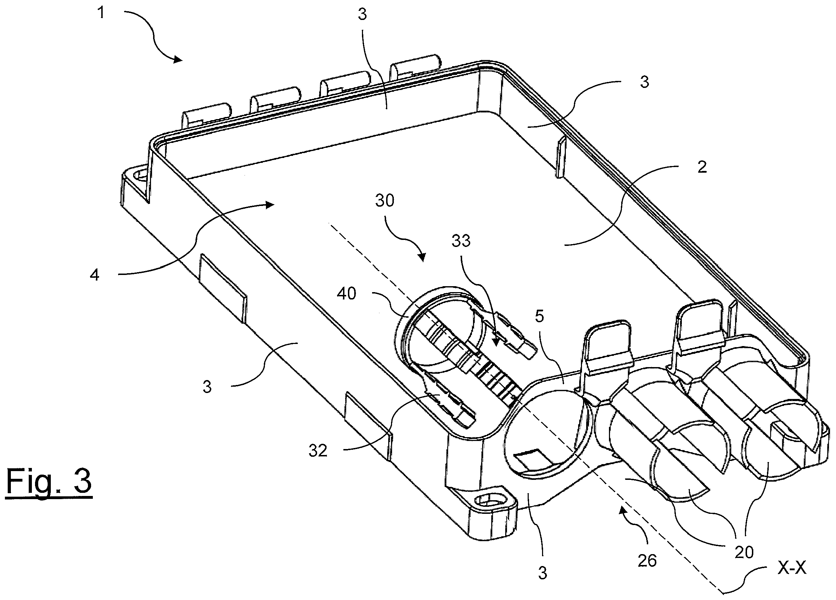

Figure 3 shows a retaining member 30 positioned in the box 1 and shifted along the axial direction X-X from inside the box 1 towards the aperture 5 until the annular portion 40 of the retaining member 30 engages by interference fit the aperture 5.

In order to allow the interference fit of the annular portion 40 within the aperture 5, the annular portion 40 has an inner surface 40a and an opposite outer surface 40b. The annular portion 40 has an outer diameter at the outer surface 40b matching the diameter of the aperture 5 of the box. Moreover, the annular portion 40 has a flange 41 protruding outwardly from the outer surface 40b of the annular portion 40. The flange 41 is configured to abut against the aperture 5 in order to prevent a movement of the annular portion 40 beyond the aperture 5. The outer diameter of the flange 41 is greater than the diameter of the outer surface 40b.

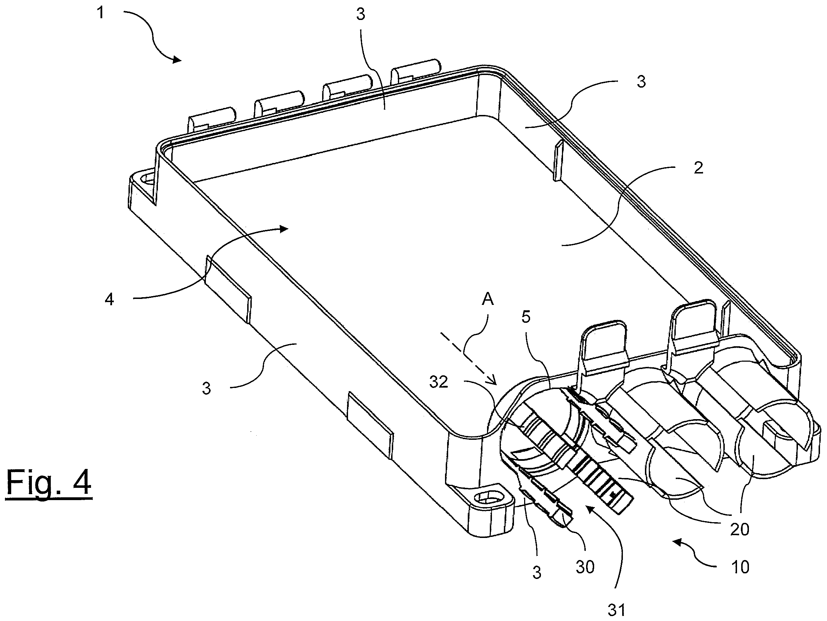

For allowing the passage of the retaining wings 32 through the aperture 5, each retaining wing 32 is resiliently radially deformable inwardly towards the cavity 31 from its rest position to a bent position. After retaining wings 32 have passed over the wall 3, each retaining wing 32 turns to its rest position. In this way, the retaining member 30 is thereby attached to the box 1 and the retaining wings 32 are positioned outside of the box 1 for receiving the corrugated conduit 100 into the cavity 31 (figure 4).

As shown in the example of figure 5, an operator may insert a corrugated conduit 100 into the cavity 31 of the retaining member 30. To this end, the corrugated conduit 100 is pushed against the retaining member 30 in the direction of the arrow A. When the corrugated conduit 100 enters the cavity 31, each retaining wing 32 is resiliently radially deformed outwardly away from the cavity 31 from its rest position to a bent position.

Inner projections 34 facing the cavity 31 are provided on the inner surface 35a of each retaining wing 32. The inner projections 34 are configured to engage the corrugated conduit 100 received in the cavity 31 to constrain the corrugated conduit along the axial direction X-X and for preventing the corrugated conduit to move axially in a direction opposite to the insertion direction A. Preferably, the inner projections 34 extend perpendicularly to the axial direction X-X and are spaced apart along the axial direction X-X in order to be at least partially inserted into the grooves of the corrugated conduit 100 when each retaining wing 32 is resiliently radially deformed inwardly from its bent position to the rest position.

The retaining wings 32 have a length and size allowing an easy radial deformation when the corrugated conduit is inserted into the cavity 31, so that the inner projections 34 overcome the outer surface of the corrugations of the corrugated conduit and rest in the spaces between adjacent corrugations.

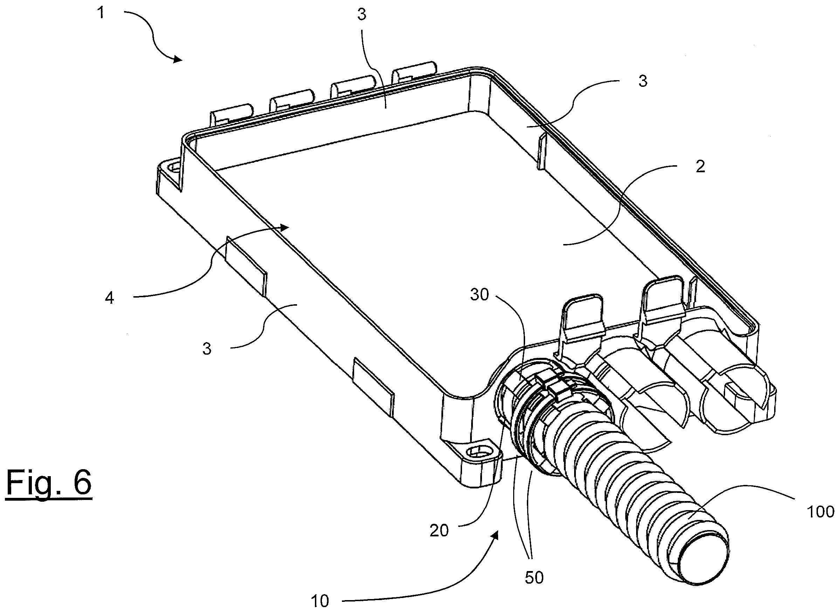

After the corrugated conduit is inserted, in order to prevent the radial outer movement of the retaining wings 32 which would allow the conduit to disengage from the retaining member 30, one or more fastener members 50 are arranged around the retaining wings 32 to hold them firmly in tightened position on the corrugated conduit 100, as shown in the example of figure 6. Preferably, each retaining wing 32 is provided with one or more outer projections 39 arranged opposite the inner projections 34 and configured to engage the fastener members 50 to constrain the fastener members 50 along the axial direction X-X relative to the retaining wings 32.

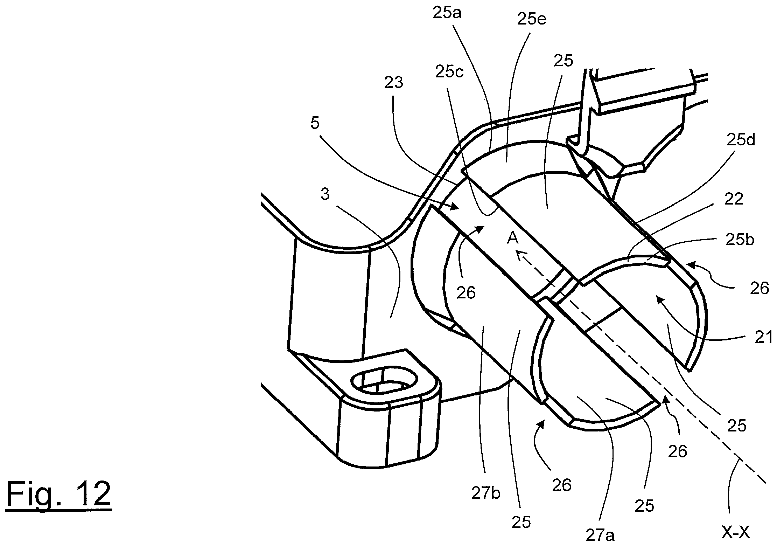

In order to provide protection of the box against dust and water, e.g. such as required by IP 56 standard, the box 1 may comprise one or more hollow body 20 extending along an axial direction X-X from the aperture 5 and defining a relative cavity 21 along the axial direction X-X, as shown, for example, in fig. 12. The hollow body 20 is adapted to receive the retaining member 30 and the corrugated conduit 100.

With reference to figure 12, the hollow body 20 and the cavity 21 extend axially between an inlet opening 22 and an outlet opening 23. The inlet opening 22 is provided for inserting the corrugated conduit into the cavity 21 axially in an insertion direction A towards the outlet opening 23, while the outlet opening 23 is provided for allowing an electrical cable and/or an optical cable passing through the corrugated conduit to exit the cavity 21 and enter the chamber 4 of the box 1.

The hollow body 20 comprises body wings 25, surrounding the cavity 21 and arranged angularly spaced apart to form gaps 26 therebetween. Each body wing 25 extends axially between an attaching end 25a and a free end 25b in the axial direction X-X towards the inlet opening 22. The attaching ends 25a start from the side wall 3 of the box 1, around the aperture 5.

Preferably, the body wings 25 are four and are arranged angularly spaced apart by 90°.

Each body wing 25 has an inner surface 27a facing inwardly towards the cavity 21 and an opposite outer surface 27b facing outwardly. Each body wing 25 has also two opposite side edges 25c, 25d each extending axially between the attaching end 25a and free end 25b arranged at the inlet opening 22.

Preferably, each body wing 25 of the hollow body 20 has a tapered portion 25e connecting the free end 25b to the attaching end 25a. The tapered portions 25e of the body wings 25 taper from the attaching ends 25a towards the free ends 25b. With this embodiment, the diameter of the hollow body 20 at the attaching ends 25a is greater than the diameter of the hollow body 20 at the free ends 25b, increasing the resistance of the body wings to manipulation during the installation.

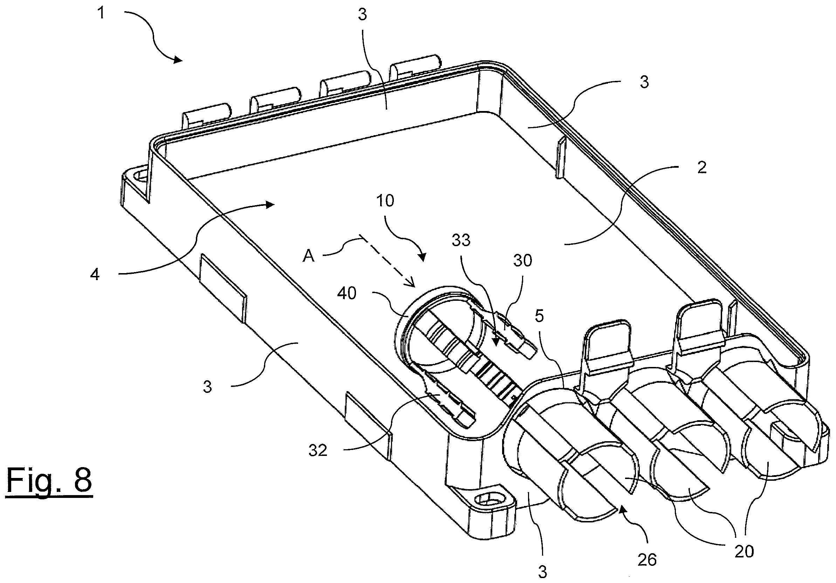

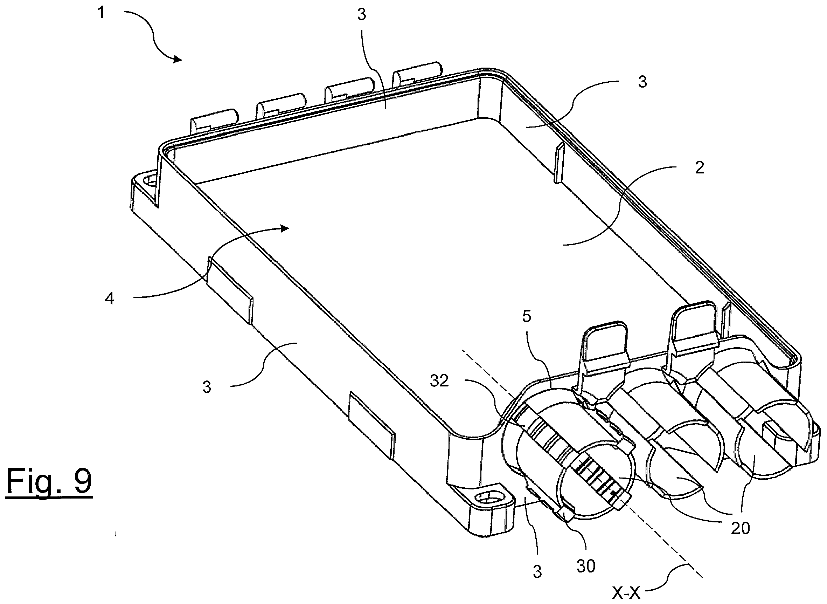

Advantageously, as shown in the example of figure 8 and 9, the hollow body 20 and the retaining member 30 are engaged together so that the retaining member 30 is constrained axially with the hollow body 20 in the insertion direction A. Each retaining wing 32 of the retaining member 30 is arranged in a respective gap 26 of the hollow body 20 between two body wings 25 and, conversely, each body wing 25 is arranged in a respective gap 33 of the retaining member 30 between two retaining wings 32. With this arrangement, the retaining wings 32 are free to move and bend radially inwardly and outwardly by moving within the respective gaps 26 of the hollow body 20.

The outer surface of the hollow body 20 has a diameter which is smaller than the outer diameter of the second portion 37 of the retaining wings 32, so that the fastener 50 can be tightened to hold the corrugated conduit without contacting the hollow body 20.

Preferably, the diameter of the hollow body 20 and of the second portion 37 are selected so that more than a single size of corrugated conduit can be used, enabling to insert the corrugated conduit and to tighten the retaining wings 32 against the corrugated conduit for all the accepted conduit sizes.

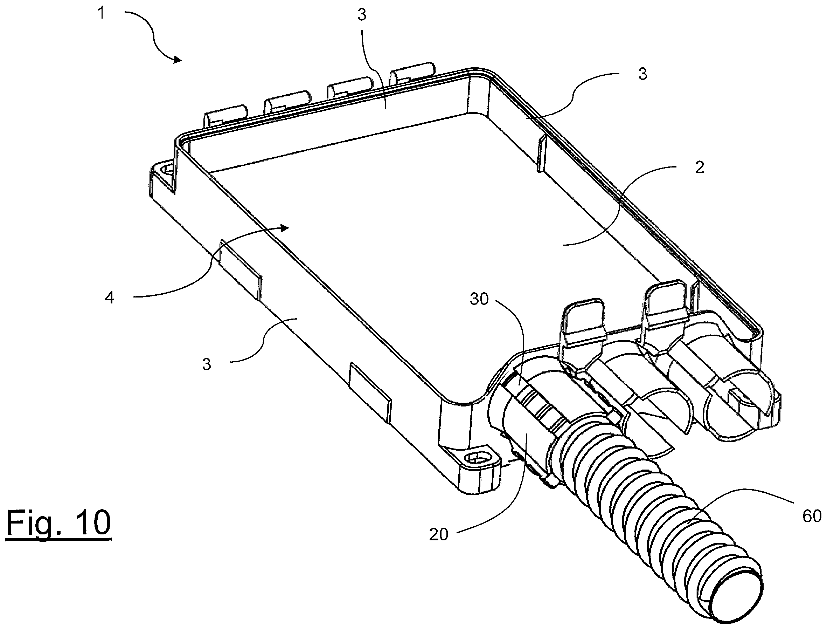

As shown in the example of figure 10, once the corrugated conduit 100 is inserted in the assembly formed by the hollow body 20 and the retaining member 30, one or more rings, such as the fasteners 50 are arranged around the retaining wings 32 and act on the retaining wings 32 to tighten the retaining wings 32 on the corrugated conduit 100 and prevent their radial bending in the outward direction.

In case a closed ring is used as fastener 50, it can be inserted on the corrugated conduit before its insertion in the retaining member 30 and thereafter caused to slide axially over the retaining wings 32.

Alternatively, a tightenable fastener can be used, which can be closed around the retaining wings 32 after the insertion of the corrugated conduit.

Preferably, the tightenable fastener 50 is a cable tie. The use of a tightenable fastener such as a cable tie enables to maintain the retaining wings in the locked position with a minimal radial space, and allows to easily apply the fastener after the corrugated conduit has been inserted in the retaining member and tighten it in lock position.

Preferably, the hollow body 20 and the retaining member 30 are made of thermoplastic material, for example, acrylonitrile butadiene styrene (ABS), polyoxymethylene (POM), nylon 6.

Preferably, the inner and outer surfaces 27a, 27b of the body wings 25 are smooth.

Advantageously, the distance between the axes of two adjacent apertures 5, adapted to receive corrugate conduits 100 having 20 mm of diameter, is comprised between 20 mm and 30 mm. Preferably, the distance of two adjacent apertures 5 adapted to receive corrugate conduits 100 having 20 mm of diameter is about 25 mm. for smaller or larger conduits the distance shall be adapted in accordance.

In this manner, it is possible to house a number of corrugated conduits in a relatively short space, while allowing a safe locking of the conduits to the box.

In order to prevent accidental manipulation 50 and for protecting the fasteners 50, separate coverings (not shown in the figures) may be provided around each fitting assembly 10. Alternatively, one single common covering may be provided all around the fitting assemblies 10.

## Claims

1. Assembly for terminating a corrugated conduit (100), comprising: - a box (1) having a side wall (3) and an aperture (5) in the side wall, the side wall having an external surface facing outside the box (1) and an internal surface facing inside the box (1);
- a fitting assembly (10) for connecting a corrugated conduit (100) to the box (1), the fitting assembly comprising:
i) a retaining member (30) in the aperture (5), the retaining member (30) comprising:
- an annular portion (40) housed inside the box (1) and an inner cavity (31) defined in the annular portion (40), the annular portion (40) being mechanically engageable with the box (1) and being configured to allow a corrugated conduit (100) to be axially inserted in the inner cavity (31), the annular portion (40) has an inner surface (40a) and an opposite outer surface (40b),
- at least one retaining wing (32) axially extending from the annular portion (40) outside of the box through the aperture and being resiliently deformable between an open position, allowing the axial movement of a corrugated conduit (100) axially inserted in the inner cavity (31), and a lock position in which the retaining wing (32) is mechanically engaged with the surface of the corrugated conduit (100), and
ii) a fastener (50) engageable with the retaining wing (32) of the retaining member (30) to maintain it in the lock position., **characterised in that** said outer surface (40b) engages by interference fit within the aperture (5), and **in that** the annular portion (40) has a flange (41) protruding outwardly from the outer surface and configured to abut against the internal surface of the side wall (3) of the box (1).

2. The assembly according to claim 1, wherein the aperture (5) in the side wall (3) of the box comprises at least one body wing (25) extending out of the box (1) in the axial direction of the aperture (5).

3. The assembly according to claims 1 or 2, wherein the aperture (5) comprises at least two body wings (25) arranged angularly spaced apart each other to form gaps (26) therebetween, the gaps (26) size being such as to house the corresponding retaining wings (32) of the retaining member (30).

4. The assembly according to any of claims 1 to 3, wherein the annular portion (40) of the retaining member (30) has outer diameter larger than the diameter of the aperture (5).

5. The assembly according to claim 4 when depending from claim 2, wherein the retaining wing (32) of the retaining member (30) comprises a first portion (36) close to the annular portion (40) and a second portion (37), the first portion (36) has first thickness and the second portion (37) has a second thickness greater than the first thickness, such as to cause the second portion (37) to extend radially outside of the surface of the body wings (25).

6. The assembly according to claim 5, wherein the body wings (25) are integrally formed with the side wall (3) of the box (1).

7. The assembly according to claim any claims 1 to 6, wherein the retaining member (30) has at least two retaining wings (32).

8. The assembly according to claim 7, wherein the retaining wings (32) are regularly spaced along the circumference of the retaining member (30).

9. The assembly according to any claims 1 to 8, wherein the retaining wing (32) comprises an attaching end (32a) connected with the annular portion (40) of the retaining member (30) and a free end (32b), the free end (32b) being radially deformable with respect to the rest position.

10. The assembly according to claim 9, wherein the rest position of the free end (32b) of the retaining wing (32) is intermediate between the open position and the lock position.

11. The assembly according to claim 10, wherein the retaining wing (32) has an inner projection (34) facing the cavity (31) and configured to engage with the outer surface of the corrugated conduit (100) received in the cavity (31) when the free end (32b) of the retaining wing (32) is in lock position, thereby preventing axial movement of the corrugated conduit (100).

12. The assembly according to any claims 1 to 11, wherein the fastener (50) is a cable tie.

13. The assembly according to any claims 1 to 12, wherein the retaining wing (32) has an outer projection (39) opposite the cavity (31) and configured to engage with the fastener (50) so as to restrain the fastener axial displacement when engaged with the retaining wing (32).

14. The assembly according to any claims 1 to 13, wherein the annular portion (40) of the retaining member (30) has outer diameter at the outer surface (40b) matching the diameter of the aperture (5), the flange (41) has an outer diameter greater than the outer diameter of the outer surface (40b).

## Patentansprüche

1. Anordnung zum Anschließen einer gewellten Leitung (100), umfassend:
- eine Dose (1) mit einer Seitenwand (3) und einer Öffnung (5) in der Seitenwand, wobei die Seitenwand eine Außenfläche hat, die aus der Dose (1) heraus weist, und eine Innenfläche, die in das Innere der Dose (1) weist;
- eine Anschlussbaugruppe (10) zum Verbinden einer gewellten Leitung (100) mit dem Kasten (1), wobei die Anschlussbaugruppe Folgendes umfasst:
i) ein Rückhalteelement (30) in der Öffnung (5), wobei das Rückhalteelement (30) Folgendes umfasst:
- einen ringförmigen Abschnitt (40), der im Inneren des Kastens (1) untergebracht ist, und einen inneren Hohlraum (31), der durch den ringförmigen Abschnitt (40) definiert ist, wobei der ringförmige Abschnitt (40) mechanisch mit dem Kasten (1) in Eingriff gebracht werden kann und so konfiguriert ist, dass eine gewellte Leitung (100) axial in den inneren Hohlraum (31) eingeführt werden kann, wobei der ringförmige Abschnitt (40) eine Innenfläche (40a) und eine gegenüberliegende Außenfläche (40b) aufweist,
- mindestens einen Halteflügel (32), der sich axial von dem ringförmigen Abschnitt (40) außerhalb des Kastens durch die Öffnung erstreckt und elastisch verformbar ist zwischen einer offenen Position, die die axiale Bewegung einer axial in den inneren Hohlraum (31) eingeführten Leitung (100) erlaubt, und einer Verriegelungsposition, in der der Halteflügel (32) mechanisch mit der Oberfläche der gewellten Leitung (100) in Eingriff ist, und
ii) ein Befestigungselement (50), das mit dem Halteflügel (32) des Halteelements (30) in Eingriff gebracht werden kann, um es in der Verriegelungsposition zu halten, **dadurch gekennzeichnet, dass** die Außenfläche (40b) durch Presspassung in die Öffnung (5) eingreift, und dass der ringförmige Abschnitt (40) einen Flansch (41) aufweist, der von der Außenfläche nach außen vorsteht und so gestaltet ist, dass er an der Innenfläche der Seitenwand (3) des Kastens (1) anliegt.

2. Anordnung nach Anspruch 1, wobei die Öffnung (5) in der Seitenwand (3) des Kastens mindestens einen Körperflügel (25) umfasst, der sich aus dem Kasten (1) in der axialen Richtung der Öffnung (5) erstreckt.

3. Anordnung nach Anspruch 1 oder 2, wobei die Öffnung (5) mindestens zwei Körperflügel (25) umfasst, die in einem Winkelabstand zueinander angeordnet sind, um dazwischen Lücken (26) zu bilden, wobei die Lücken (26) so groß sind, dass sie die entsprechenden Halteflügel (32) des Halteelements (30) aufnehmen.

4. Anordnung nach einem der Ansprüche 1 bis 3, wobei der ringförmige Abschnitt (40) des Halteelements (30) einen Außendurchmesser hat, der größer ist als der Durchmesser der Öffnung (5).

5. Anordnung nach Anspruch 4, wenn dieser von Anspruch 2 abhängt, wobei der Halteflügel (32) des Halteelements (30) einen ersten Abschnitt (36) in der Nähe des ringförmigen Abschnitts (40) und einen zweiten Abschnitt (37) umfasst, wobei der erste Abschnitt (36) eine erste Dicke aufweist und der zweite Abschnitt (37) eine zweite Dicke aufweist, die größer ist als die erste Dicke, so dass sich der zweite Abschnitt (37) radial außerhalb der Oberfläche der Körperflügel (25) erstreckt.

6. Anordnung nach Anspruch 5, wobei die Körperflügel (25) einstückig mit der Seitenwand (3) des Kastens (1) ausgebildet sind.

7. Anordnung nach einem der Ansprüche 1 bis 6, wobei das Rückhalteelement (30) mindestens zwei Halteflügel (32) aufweist.

8. Anordnung nach Anspruch 7, wobei die Halteflügel (32) entlang des Umfangs des Halteelements (30) regelmäßig beabstandet sind.

9. Anordnung nach einem der Ansprüche 1 bis 8, wobei der Halteflügel (32) ein Befestigungsende (32a), das mit dem ringförmigen Abschnitt (40) des Halteelements (30) verbunden ist, und ein freies Ende (32b) aufweist, wobei das freie Ende (32b) in Bezug auf die Ruhestellung radial verformbar ist.

10. Anordnung nach Anspruch 9, wobei die Ruheposition des freien Endes (32b) des Halteflügels (32) zwischen der offenen Position und der Verriegelungsposition liegt.

11. Anordnung nach Anspruch 10, wobei der Halteflügel (32) einen inneren Vorsprung (34) aufweist, der dem Hohlraum (31) zugewandt und so konfiguriert ist, dass er mit der Außenfläche der im Hohlraum (31) aufgenommenen welligen Leitung (100) in Eingriff kommt, wenn sich das freie Ende (32b) des Halteflügels (32) in der Verriegelungsposition befindet, wodurch eine axiale Bewegung der Leitung (100) verhindert wird.

12. Anordnung nach einem der Ansprüche 1 bis 11, wobei das Befestigungsmittel (50) ein Kabelbinder ist.

13. Anordnung nach einem der Ansprüche 1 bis 12, wobei der Halteflügel (32) einen äußeren Vorsprung (39) aufweist, der dem Hohlraum (31) gegenüberliegt und so gestaltet ist, dass er mit dem Befestigungselement (50) in Eingriff kommt, um die axiale Verschiebung des Befestigungselements einzuschränken, wenn es mit dem Halteflügel (32) in Eingriff steht.

14. Anordnung nach einem der Ansprüche 1 bis 13, wobei der ringförmige Abschnitt (40) des Halteelements (30) einen Außendurchmesser an der Außenfläche (40b) hat, der dem Durchmesser der Öffnung (5) entspricht, und der Flansch (41) einen Außendurchmesser hat, der größer ist als der Außendurchmesser der Außenfläche (40b).

## Revendications

1. Ensemble pour la terminaison d'un conduit ondulé (100), comprenant :
- une boîte (1) ayant une paroi latérale (3) et une ouverture (5) dans la paroi latérale, la paroi latérale ayant une surface externe tournée vers l'extérieur de la boîte (1) et une surface interne tournée vers l'intérieur de la boîte (1) ;
- un ensemble de raccord (10) pour connecter un conduit ondulé (100) à la boîte (1), l'ensemble de raccord comprenant :
i) un organe de retenue (30) dans l'ouverture (5), l'organe de retenue (30) comprenant :
- une partie annulaire (40) logée à l'intérieur de la boîte (1) et une cavité (31) intérieure définie dans la partie annulaire (40), la partie annulaire (40) pouvant se mettre en prise mécaniquement avec la boîte (1) et étant configurée pour permettre à un conduit ondulé (100) d'être inséré axialement dans la cavité (31) intérieure, la partie annulaire (40) a une surface intérieure (40a) et une surface extérieure (40b) opposée,
- au moins une aile de retenue (32) s'étendant axialement à partir de la partie annulaire (40) à l'extérieur de la boîte à travers l'ouverture et étant déformable de manière élastique entre une position ouverte, permettant le mouvement axial d'un conduit ondulé (100) inséré axialement dans la cavité (31) intérieure, et une position de verrouillage dans laquelle l'aile de retenue (32) se met en prise mécaniquement avec la surface du conduit ondulé (100), et
ii) un élément de fixation (50) pouvant se mettre en prise avec l'aile de retenue (32) de l'organe de retenue (30) pour le maintenir dans la position de verrouillage, **caractérisé en ce que** ladite surface extérieure (40b) se met en prise par ajustement serré dans l'ouverture (5), et **en ce que** la partie annulaire (40) a une bride (41) faisant saillie vers l'extérieur à partir de la surface extérieure et configurée pour venir en butée contre la surface interne de la paroi latérale (3) de la boîte (1).

2. Ensemble selon la revendication 1, dans lequel l'ouverture (5) dans la paroi latérale (3) de la boîte comprend au moins une aile de corps (25) s'étendant hors de la boîte (1) dans la direction axiale de l'ouverture (5).

3. Ensemble selon les revendications 1 ou 2, dans lequel l'ouverture (5) comprend au moins deux ailes de corps (25) agencées de manière angulaire et espacées l'une de l'autre pour former des écarts (26) entre elles, la taille des écarts (26) étant telle qu'elle permet de loger les ailes de retenue (32) correspondantes de l'organe de retenue (30).

4. Ensemble selon l'une quelconque des revendications 1 à 3, dans lequel la partie annulaire (40) de l'organe de retenue (30) a un diamètre extérieur plus grand que le diamètre de l'ouverture (5).

5. Ensemble selon la revendication 4 lorsqu'elle dépend de la revendication 2, dans lequel l'aile de retenue (32) de l'organe de retenue (30) comprend une première partie (36) proche de la partie annulaire (40) et une deuxième partie (37), la première partie (36) a une première épaisseur et la deuxième partie (37) a une deuxième épaisseur supérieure à la première épaisseur, de manière à amener la deuxième partie (37) à s'étendre radialement à l'extérieur de la surface des ailes de corps (25).

6. Ensemble selon la revendication 5, dans lequel les ailes de corps (25) sont formées d'un seul tenant avec la paroi latérale (3) de la boîte (1).

7. Ensemble selon l'une quelconque des revendications 1 à 6, dans lequel l'organe de retenue (30) a au moins deux ailes de retenue (32).

8. Ensemble selon la revendication 7, dans lequel les ailes de retenue (32) sont régulièrement espacées le long de la circonférence de l'organe de retenue (30).

9. Ensemble selon l'une des revendications 1 à 8, dans lequel l'aile de retenue (32) comprend une extrémité de fixation (32a) connectée à la partie annulaire (40) de l'organe de retenue (30) et une extrémité libre (32b), l'extrémité libre (32b) étant déformable radialement par rapport à la position de repos.

10. Ensemble selon la revendication 9, dans lequel la position de repos de l'extrémité libre (32b) de l'aile de retenue (32) est intermédiaire entre la position ouverte et la position de verrouillage.

11. Ensemble selon la revendication 10, dans lequel l'aile de retenue (32) a une saillie intérieure (34) faisant face à la cavité (31) et configurée pour se mettre en prise avec la surface extérieure du conduit ondulé (100) reçu dans la cavité (31) lorsque l'extrémité libre (32b) de l'aile de retenue (32) est en position de verrouillage, empêchant ainsi le mouvement axial du conduit ondulé (100).

12. Ensemble selon l'une des revendications 1 à 11, dans lequel l'élément de fixation (50) est un attache câble.

13. Ensemble selon l'une des revendications 1 à 12, dans lequel l'aile de retenue (32) a une saillie extérieure (39) opposée à la cavité (31) et configurée pour se mettre en prise avec l'élément de fixation (50) de manière à limiter le déplacement axial de l'élément de fixation lorsqu'il se met en prise avec l'aile de retenue (32).

14. Ensemble selon l'une des revendications 1 à 13, dans lequel la partie annulaire (40) de l'organe de retenue (30) a un diamètre extérieur au niveau de la surface extérieure (40b) concordant avec le diamètre de l'ouverture (5), la bride (41) a un diamètre extérieur supérieur au diamètre extérieur de la surface extérieure (40b).
